# DEMANDE DE BREVET EUROPEEN

(11) **EP 1 298 047 A1**
(43) Date de publication de la demande: **02.04.2003**
(21) Numéro de dépôt: 02292388.2
(22) Date de dépôt: 27.09.2002
(51) Int. Cl.: B62K 19/06, B62K 3/06

(54) **Cadre de vélo**

(30) Priorité: 27.09.2001 FR 0112463
(71) Demandeur: Renault s.a.s., 92100 Boulogne Billancourt (FR)
(72) Inventeur: Quirin, Luc, 75011 Paris (FR)

(57) **Abrégé**

Cadre de vélo (1) comportant un premier tube (10), destiné à recevoir une selle (2) et un palier (3) de pédalier, un second tube (20) destiné à recevoir une colonne de direction, lesdits premier et second tubes (10, 20) étant reliés par au moins un tube de liaison (30), caractérisé en ce que le tube de liaison (30) à la forme d'un V dont une extrémité libre (31) d'une branche arrière (32) est fixée à une partie supérieure (11) du premier tube (10) et une extrémité libre (33) d'une branche avant (34) est fixée au second tube (20).

## Description

L'invention concerne un cadre de vélo et plus particulièrement un cadre de vélo permettant d'obtenir une zone de dégagement pour les jambes tout en assurant une bonne rigidité du cadre.

On connaît des vélos de plusieurs types, et en particulier des vélos de ville, destinés en règle générale à faciliter l'installation d'une personne et en particulier des femmes habillées d'une jupe. Ces vélos comportent un cadre qui est constitué d'un premier tube d'orientation sensiblement vertical, destiné à supporter une selle et un palier du pédalier, d'un second tube sensiblement parallèle au premier tube et destiné à recevoir une colonne de direction et d'au moins deux tubes de liaison du premier et second tube. Ces tubes de liaison sont disposés généralement l'un au-dessus de l'autre en reliant, d'une part, l'extrémité inférieure du second tube à l'extrémité inférieure du premier tube et d'autre part, l'extrémité supérieure du second tube à une partie basse du premier tube. Deux éléments d'une structure arrière formant chacun sensiblement un triangle, localisé de part et d'autre de la roue arrière, portant ladite roue.

Une telle disposition des tubes de liaison nécessite un renforcement de la structure et par conséquent provoque une augmentation du poids et du coût matière. Ce renforcement est rendu nécessaire par le fait que les tubes de liaison relient le second tube, recevant la colonne de direction, à la partie basse du premier tube supportant la selle, sans créer de lien avec la partie haute dudit premier tube.

Afin de pallier ces inconvénients l'invention a pour objet un cadre de vélo permettant de créer un espace de dégagement des jambes tout en reliant la colonne de direction à la partie supérieure et inférieure du premier tube.

L'invention a également pour objet un cadre de vélo dont le poids est optimisé par rapport à la rigidité.

Selon une caractéristique de l'invention, le tube de liaison à la forme d'un V dont une extrémité libre d'une branche arrière est fixée à une partie supérieure du premier tube et une extrémité libre d'une branche avant est fixée au second tube.

Selon une autre caractéristique de l'invention, la branche avant du tube de liaison est fixé sensiblement au milieu du second tube.

Selon une autre caractéristique de l'invention, les extrémités libres du tube de liaison se prolongent par des extensions ouvertes latéralement qui reçoivent respectivement les premier et second tubes.

Selon une autre caractéristique de l'invention, l'extension de la branche avant du tube de liaison s'étend jusqu'à la partie supérieure du second tube.

Selon une autre caractéristique de l'invention, le cadre de vélo comporte une structure inférieure qui est fixée en partie sur la branche arrière du tube de liaison.

Selon une autre caractéristique de l'invention, la structure inférieure forme un triangle avant et un triangle arrière dont la base commune est formée par l'intersection du premier tube avec ladite structure inférieure.

Selon une autre caractéristique de l'invention, le côté supérieur du triangle avant est fixé sur la branche arrière du tube de liaison.

Selon une autre caractéristique de l'invention, le côté inférieur du triangle avant est sensiblement dans le prolongement de la branche avant du tube de liaison.

Selon une autre caractéristique de l'invention, un sommet du triangle arrière porte un élément support d'un axe de roue arrière.

Selon une autre caractéristique de l'invention, la structure inférieure est formée de deux flancs symétriques disposés de part et d'autre du premier tube.

Selon une autre caractéristique de l'invention, une structure de porte-bagages coopère avec la jonction du tube de liaison et de la structure inférieure.

D'autres caractéristiques et avantages de l'invention apparaîtront à la lecture de la description d'exemples de réalisation d'un cadre de vélo aux dessins annexés dans lesquels :

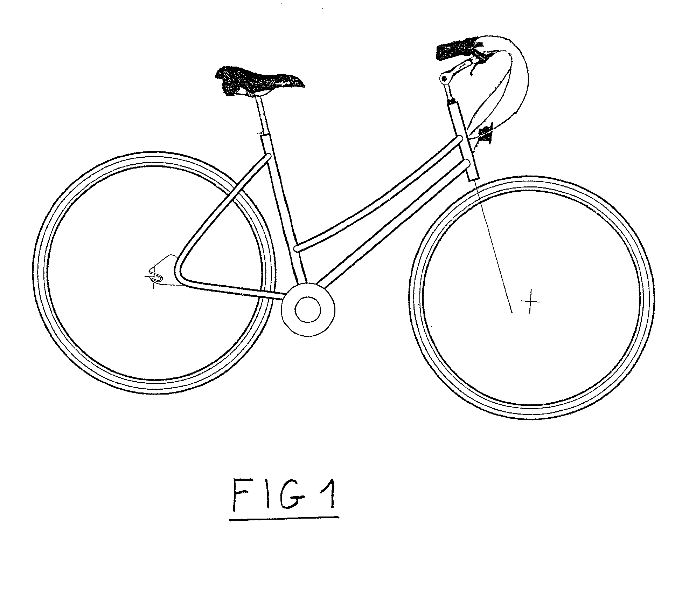

- La figure 1 représente un cadre de vélo selon l'état de la technique.
- La figure 2 représente un cadre de vélo selon l'invention.

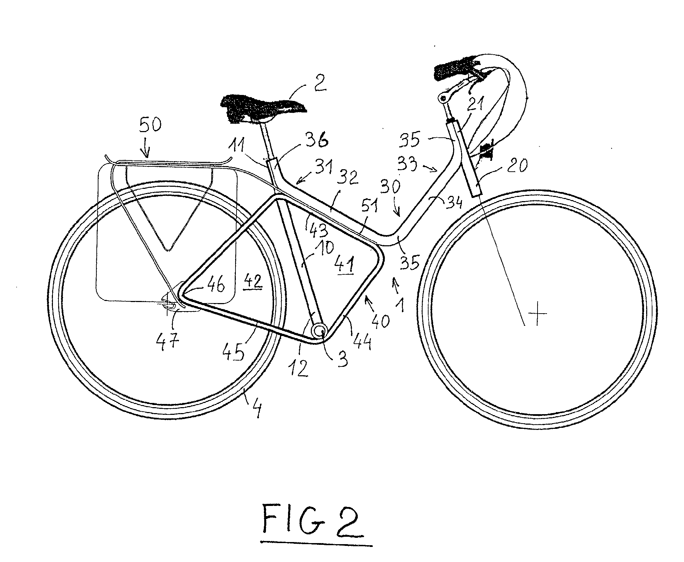

Dans la suite de la description nous décrirons uniquement le cadre du vélo à l'exclusion de tous les éléments ou accessoires connus en soit et portés par ledit cadre, et dont la description n'est pas nécessaire à la compréhension de l'invention. Tel que représenté à la figure 2, le cadre de vélo 1 selon l'invention comporte un premier tube 10 d'orientation verticale, légèrement incliné vers l'arrière de manière connue en soit. Ce tube 10 reçoit une selle 2 dans son extrémité supérieure 11, et un palier 3 de pédalier à son extrémité inférieure 12. Un second tube 20 sensiblement parallèle au premier tube 10 reçoit une colonne de direction. Un tube de liaison 30 ayant la forme général d'un V est relié, au premier tube 10, par une extrémité libre 31 de la branche arrière 32 du V et au second tube 20, par une extrémité libre 33 de la branche avant 34 du V. La pointe 35 du V arrive sensiblement au niveau de la partie médiane du premier tube 10. Chaque extrémité libre 31 et 33 du tube de liaison 30 peut comporter des extensions 36 et 35 ouvertes latéralement, destinées à recevoir respectivement les parties supérieures 11 et 21 respectivement des premier et second tubes, afin d'augmenter la tenue de la soudure. Le tube de liaison 30 peut être constitué d'une seule pièce. Le tube de liaison 30 peut être également un élément plein.

Une structure inférieure 40, divisée en deux flancs latéraux symétriques, porte la roue arrière 4. Chacun des flancs de la structure inférieure 40 formant, avec le premier tube 10, un triangle avant 41 et un triangle arrière 42. La partie du premier tube 10 qui coopère avec les flancs de la structure inférieure 40, formant une base commune des triangles avant 41 et arrière 42. Chacun des flancs peut être formé d'un tube cintré. Le côté supérieur 43 du triangle avant 41 coopère avec la branche arrière 32 du tube de liaison 30. Le côté inférieur 44 du triangle avant 41 est disposé, sensiblement, dans le prolongement de la branche avant 34 du tube de liaison 30. Les côtés inférieurs 44 et 45 respectivement des triangles avant 41 et arrière 42 se rejoignent au niveau du palier 3 de pédalier.

Un élément de structure 51 de porte-bagages 50 coopère avec la jonction du tube de liaison 30 et du côté supérieur 43 du triangle avant 41, et avec le sommet arrière 46 du triangle arrière 42, qui porte des éléments de réception 47 d'un axe de roue arrière 4.

Le palier 3 du pédalier porté par l'extrémité inférieure 12 du premier tube 10 est fixé également au niveau de la jonction des branches inférieures 44 et 45 des triangles avant 41 et arrière 42.

Un cache latéral (non représenté) peut habiller le tube de liaison 30.

## Revendications

1. Cadre de vélo (1) comportant un premier tube (10), destiné à recevoir une selle (2) et un palier (3) de pédalier, un second tube (20) destiné à recevoir une colonne de direction, lesdits premier et second tubes (10, 20) étant reliés par au moins un tube de liaison (30), **caractérisé en ce que** le tube de liaison (30) à la forme d'un V dont une extrémité libre (31) d'une branche arrière (32) est fixée à une partie supérieure (11) du premier tube (10) et une extrémité libre (33) d'une branche avant (34) est fixée au second tube (20).

2. Cadre de vélo selon la revendication 1, **caractérisé en ce que** la branche avant (34) du tube de liaison (30) est fixé sensiblement au milieu du second tube (20).

3. Cadre de vélo selon l'une quelconque des revendications précédentes, **caractérisé en ce que** les extrémités libres (31, 33) du tube de liaison (30) se prolongent par des extensions (36, 35) ouvertes latéralement qui reçoivent respectivement les premier (10) et second (20) tubes.

4. Cadre de vélo selon la revendication 3, **caractérisé en ce que** l'extension (35) de la branche avant (34) du tube de liaison (30) s'étend jusqu'à la partie supérieure (21) du second tube (20).

5. Cadre de vélo selon l'une quelconque des revendications précédentes, **caractérisé en ce qu'**il comporte une structure inférieure (40) qui est fixée en partie sur la branche arrière (32) du tube de liaison (30).

6. Cadre de vélo selon la revendication 5, **caractérisé en ce que** la structure inférieure (40) forme un triangle avant (41) et un triangle arrière (42) dont la base commune est formée par l'intersection du premier tube (10) avec ladite structure inférieure (50).

7. Cadre de vélo selon la revendication 6, **caractérisé en ce que** le côté supérieur (43) du triangle avant (41) est fixé sur la branche arrière (32) du tube de liaison (30).

8. Cadre de vélo selon l'une quelconque des revendications 6 à 7, **caractérisé en ce que** le côté inférieur (44) du triangle avant (41) est sensiblement dans le prolongement de la branche avant (34) du tube de liaison (30).

9. Cadre de vélo selon l'une quelconque des revendications 6 à 8, **caractérisé en ce qu'**un sommet (46) du triangle arrière (42) porte un élément support (47) d'un axe de roue arrière (4).

10. Cadre de vélo selon l'une quelconque des revendications 6 à 9, **caractérisé en ce que** la structure inférieure (40) est formée de deux flancs symétriques disposés de part et d'autre du premier tube (10).

11. Cadre de vélo selon l'une quelconque des revendications 5 à 10, **caractérisé en ce qu'**une structure (51) de porte-bagages (50) coopère avec la jonction du tube de liaison (30) et de la structure inférieure (40).
